# EUROPÄISCHE PATENTSCHRIFT

(11) **EP 1 410 961 B1**
(45) Veröffentlichungstag und Bekanntmachung des Hinweises auf die Patenterteilung: **20.01.2010**
(21) Anmeldenummer: 03023053.6
(22) Anmeldetag: 14.10.2003
(51) Int. Cl.: B60R 25/00, G07C 9/00

(54) **Verfahren zur Überprüfung der Anwesenheit eines ID-Gebers im Innenraum eines Kraftfahrzeuges**
Process for the verification of the presence of a ID-transponder within a vehicle
Procédé pour la vérification de la présence d'un transpondeur dans l'habitacle d'un véhicule

(30) Priorität: 17.10.2002 DE 10248419
(43) Veröffentlichungstag der Anmeldung: 21.04.2004
(73) Patentinhaber: Hella KGaA Hueck & Co., 59552 Lippstadt (DE)
(72) Erfinder: Bökenbrink, Maik, 33818 Leopoldshöhe (DE); Dirkers, Helge, 59557 Lippstadt (DE); Figura, Christof, 59174 Kamen (DE); Mehn, Michael, 59602 Rüthen (DE); Reimann, Martin, 59071 Hamm (DE); Scharwald, Lothar, 59557 Lippstadt (DE); Schirrmann, Jörg, 33604 Bielefeld (DE); Schneider, Klaus, 49393 Lohne (DE); Schniedertüns, Volker, 33154 Salzkotten (DE); Schütte, Guido, 59555 Lippstadt (DE)

(56) Entgegenhaltungen:
- EP-A- 0 426 114
- EP-A- 0 475 356
- EP-A- 1 184 236
- WO-A-01/25573

## Beschreibung

Die Erfindung bezieht sich auf ein Verfahren zur Überprüfung der Anwesenheit eines ID-Gebers (auch Funkschlüssel genannt) im Innenraum eines Kraftfahrzeuges. Ein derartiger ID-Geber dient sowohl zur drahtlosen (fernbedienten) Zugangskontrolle, d.h. zum Ver- oder Entriegeln der Fahrzeugtüren als auch zur drahtlosen Freischaltung eines Motorstart-Schalters sowie eventuell weiterer Wegfahrsperreinrichtungen. Um den Motor zu starten, ist in diesem Fall nicht mehr ein mechanischer Schlüssel erforderlich, der mit seinem Schlüsselbart in ein Zündschloß eingesteckt und gedreht werden muß. Das Starten des Motors erfolgt vielmehr über die Betätigung eines Motorstart-Schalters (Drehschalter, Kippschalter, Taste etc). Dabei führt die Betätigung des Motorstart-Schalters allerdings nur dann tatsächlich zum Starten des Motors oder ist die Betätigung des Motorstart-Schalters überhaupt nur dann möglich, wenn der Motorstart-Schalter zuvor freigeschaltet wurde. Diese Freischaltung setzt jedoch die Anwesenheit eines ID-Gebers im Fahrzeuginnenraum und dessen Authentifizierung voraus. Zu diesem Zweck befindet sich im Innenraum des Fahrzeuges mindestens eine Antenne (vorzugsweise drei LF-Antennen) zur Aussendung eines Anwesenheits-Abfragesignals an den/die ID-Geber. Nach Erhalt des Abfragesignals sendet ein ID-Geber dann ein Anwesenheitssignal zurück, woraufhin sich dann eine sogenannte Challenge-Response-Kommunikation zwischen dem Fahrzeug (oder besser einem Steuergerät im Fahrzeug) und dem ID-Geber zu dessen Authentifizierung anschließt. Bei erfolgreicher Authentifizierung wird dann der Motorstart-Schalter freigeschaltet, so daß der Motor durch Betätigung dieses Schalters auch tatsächlich gestartet werden kann.

Wenn der Motor erst einmal läuft, d.h. nach erfolgreicher Authentifizierung und Motorstart, ist die Anwesenheit eines ID-Gebers im Fahrzeug nicht mehr erforderlich ist. Genau diese Tatsache kann jedoch in verschiedenen Situationen Probleme verursachen. Eine solche Situation ergibt sich beispielsweise, wenn der Fahrer oder eine sonstige Person, die den ID-Geber z.B. in einer Tasche bei sich trägt, das Fahrzeug mit dem ID-Geber bei laufendem Motor verlässt. Falls diese Person dann nicht wieder in das Fahrzeug einsteigt, oder falls diese Person den ID-Geber nicht an eine andere Person übergibt, die danach in das Fahrzeug einsteigt, oder falls diese Person beim Wiedereinstieg in das Fahrzeug den ID-Geber unwissentlich nicht mehr bei sich hat, z.B. weil sie ihn irgendwo liegen gelassen hat oder aus sonst irgendeinem Grund, ist es möglich, daß die Fahrt ohne ID-Geber wiederaufgenommen wird. Dies hat jedoch zur Konsequenz, daß später eine Fahrzeugverriegelung und ein erneuter Motorstart aufgrund des fehlenden ID-Gebers nicht möglich ist. Diese Problematik gibt es bei einem konventionellen System mit mechanischem Schlüssel nicht, da dieser bei laufendem Motor zwangsweise im Zündschloß verbleibt, so daß ein Entfernen des Schlüssels aus dem Fahrzeug bei laufendem Motor grundsätzlich nicht möglich ist.

Aus diesem Grunde ist es erforderlich, die Anwesenheit des ID-Gebers auch bei laufendem Motor zu überprüfen. Dies kann (siehe z.B. DE 199 55 106C2) dadurch erfolgen, daß dauernd in bestimmten Zeitabständen (zyklisches Abfragen), z.B. alle 30 Sekunden, über die Innenraum-Antenne(n) ein Anwesenheits-Abfragesignal gesendet wird. Dies hat jedoch wiederum zur Folge, daß der ID-Geber, der sich im Normalfall bei laufendem Motor im Fahrzeuginnenraum befindet, alle 30 Sekunden ein Anwesenheitssignal zurücksendet. Dies bewirkt nun, daß die Lebensdauer der Batterie, die sich im ID-Geber befindet, stark reduziert wird, da bei jedem Senden eines Anwesenheitssignals durch den ID-Geber Energie verbraucht wird.

Aus der WO 01/25573 A1 ist beispielsweise ein Verfahren zur Überprüfung der Anwesenheit eines ID-Gebers im Innenraum eines Kraftfahrzeuges bekannt, bei dem der ID-Geber zur drahtlosen Zugangskontrolle und zur drahtlosen Freischaltung eines Motorstart-Schalters dient, wobei im Innenraum des Fahrzeuges mindestens eine Antenne zur Aussendung eines Anwesenheits-Abfragesignals vorhanden ist. Bei dem bekannten Verfahren erfolgt die Aussendung von Anwesenheits-Abfragesignalen nur dann, wenn ein Zusatzereignis, hier die Betätigung des Ein- oder des Ausschalters der Zündung, erfolgt.

Aufgabe der Erfindung ist es, ein Verfahren zur Überprüfung der Anwesenheit eines ID-Gebers im Innenraum eines Kraftfahrzeuges zu schaffen, das die Batterie des ID-Gebers schont und dennoch zuverlässig ist.

Diese Aufgabe wird dadurch gelöst, daß bei laufendem Motor die Aussendung von Anwesenheits-Abfragesignalen über die mindestens eine Innenraum-Antenne erfolgt, wenn ein Zusatzereignis, wie die Unter-/Überschreitung einer Fahrgeschwindigkeit, die Betätigung der Feststellbremse, der Kupplung, des Schalthebels oder des Getriebewählschalters erfolgt und nur nach Auswertung der Information mindestens eines Zustandssensors, der den Zustand (Offen/Geschlossen) für eine Fahrzeugtür, eine Kofferraumklappe, ein Fenster, ein Schiebedach oder ein Verdeck ermittelt.

Mit anderen Worten erfolgt die Anwesenheits-Abfrage bei laufendem Motor nicht dauernd oder zyklisch, sondern nur ereignisgesteuert, wobei der Eintritt des die Anwesenheitsabfrage auslösenden Ereignisses anhand der Information von mindestens einem der oben genannten Zustandssensoren erfolgt. Dadurch, daß keine immer fortdauernde zyklische Aussendung von Anwesenheits-Abfragesignalen erfolgt, sondern immer nur dann, wenn ein bestimmtes Ereignis vorliegt, wird die Lebensdauer der Batterie erheblich verlängert. Dabei werden die ein Anwesenheits-Abfragesignal auslösende Ereignisse derart ausgewählt, daß ohne das Vorliegen eines solchen Ereignisses und nach Auswertung der Information mindestens eines Zustandssensors bei plausibler Betrachtung mit extrem hoher Wahrscheinlichkeit auch ohne Überprüfung davon ausgegangen werden kann, daß ein ID-Geber im Innenraum vorhanden ist. Somit ist das erfindungsgemäße Verfahren ebenfalls sehr zuverlässig.

Zwar ist es aus der EP 0 475 356 A1 bekannt, eine Innenraumüberwachung erst durch das Öffnen einer Tür zu aktivieren. Mit der daraus bekannten Innenraumüberwachung wird jedoch ein völlig anderer Zweck verfolgt, nämlich die Überwachung, ob sich zum Zeitpunkt einer Türverriegelung noch eine Person im Fahrzeug befindet.

Ähnlich verhält es sich bei den aus der EP 1 184 236 A2 und der EP 0 426 114 A2 bekannten Lösungen.

Folgende Verfahrensweisen sind vorgesehen:
1) In einer ersten Variante besteht das ein Anwesenheits-Abfragesignal auslösende Ereignis nicht allein in dem Öffnen und dem nachfolgenden Schließen einer Fahrzeugtür, sondern zusätzlich auch in einem das Wiederanfahren signalisierenden Ereignis. Dabei kann es sich bei dem das Wiederanfahren signalisierenden Ereignis um das Ansteigen der Fahrgeschwindigkeit handeln, die mittels eines Fahrgeschwindigkeitssensors ermittelt wird, oder um das Lösen der Feststellbremse oder um die Betätigung der Kupplung oder um die Betätigung des Schalthebels oder um die Betätigung des Getriebewählschalters. Diese Variante ist besonders vor dem Hintergrund eines Ent- oder Belade-Szenarios vorteilhaft, wo eine Fahrzeugtür mehrmals geöffnet und wieder geschlossen wird. Dabei soll nicht bei jedem Öffnen/Schließen einer Fahrzeugtür ein Anwesenheits-Anfragesignal ausgelöst werden, mit der Konsequenz, daß in jedem Fall bei Abwesenheit eines ID-Gebers im Innenraum ein Warnsignal erzeugt wird. Hier könnte es nämlich dazu kommen, daß in unnötiger Weise mehrmals ein Warnsignal erzeugt wird, was dann als störend empfunden wird. Dies wird vermieden, wenn nach dem Öffnen/Schließen einer Fahrzeugtür nur beim Wiederanfahren ein Abwesenheits-Anfragesignal gesendet wird. In diesem Fall würde nur ein Fahrer, der das Fahrzeug mit ID-Geber verlassen hat, und ohne ID-Geber wiedereingestiegen ist und dann wiederanfährt, ein Warnsignal erhalten.
2) In einer zweiten Variante besteht das ein (zyklisches) Anwesenheits-Abfragesignal auslösende Ereignis nicht allein darin, daß die "Außenhaut" des Fahrzeuges geöffnet ist. In dieser Variante wird vielmehr auch berücksichtigt, ob das Fahrzeug steht oder zumindest nahezu steht. Dieser Variante liegt die Überlegung zugrunde, daß z.B. ein Entwenden durch Unbefugte eines im Innenraum auf dem Beifahrersitz liegenden ID-Gebers bei geöffnetem Seitenfenster mit hoher Wahrscheinlichkeit nur dann möglich ist, wenn das Fahrzeug steht (z.B. vor einer roten Ampel). Das Zusatzereignis "Fahrzeug steht" kann über die Fahrgeschwindigkeit ermittelt werden, wobei dieses Zusatzereignis als eingetreten gilt, wenn die Geschwindigkeit unterhalb einer Maximalgeschwindigkeit (z.B. Schritt-Tempo) liegt. Das Zusatzereignis kann auch als eingetreten gelten, wenn die Feststellbremse betätigt wird, oder der Getriebewählschalter in die Parkstellung gebracht wird.

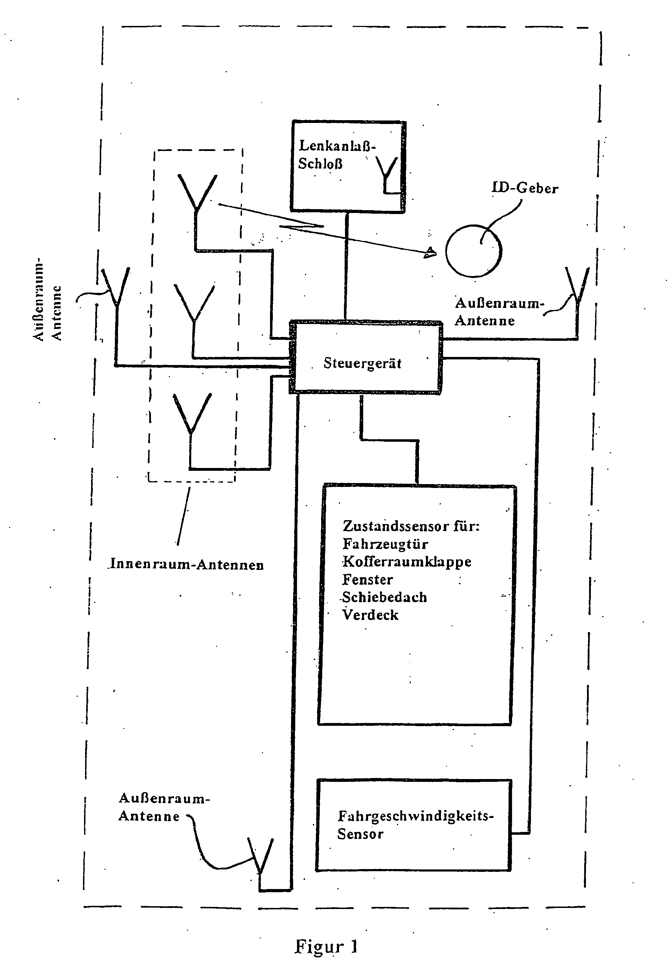

Anhand der beigefügten Zeichnung (Figur 1) soll die Erfindung näher erläutert werden. Schematisch ist ein Fahrzeug mit einem sogenannten Passive-Entry-System dargestellt, wobei der Fahrzeuginnenraum durch eine gestrichelte Linie symbolisch angedeutet ist. Bei einem solchen Fahrzeug erfolgt sowohl die Zugangskontrolle, d.h. das Ver- und Entriegeln der Fahrzeugtüren, als auch die Freischaltung der Wegfahrsperre, insbesondere eines Motorstart-Schalters, funkfernbedient über einen ID-Geber.

Für das Ansprechen des ID-Gebers im Außenraum im Rahmen der Zugangskontrolle sind drei LF-Antennen (Low Frequency) vorgesehen, und zwar jeweils eine im Türgriff der Fahrer- und Beifahrertür sowie eine im Griff der Hecktür oder am heckseitigen Stoßfänger. Für das Aussenden der Anwesenheits-Abfragesignale zur Überprüfung der Anwesenheit im Innenraum sind wiederum drei LF-Antennen vorgesehen, von den zwei im Bereich der Mittelkonsole und eine im Heckbereich des Fahrzeuges angeordnet ist, um den gesamten Fahrzeuginnenraum zu erfassen. Die Ansteuerung sämtlicher Antennen erfolgt über ein zentrales Steuergerät.

Der Motorstart-Schalter ist Bestandteil einer kombinierten Wegfahrsperreinrichtung (Lenkanlaß-Schloß), die auch ein Lenkradschloß umfasst. Dabei kann die Wegfahrsperreinrichtung, insbesondere der Motorstart-Schalter, nur dann freigeschaltet werden, wenn zuvor die Anwesenheit eines ID-Gebers im Fahrzeuginnenraum und dessen Authentizität festgestellt wurde. Die Anwesenheits-Abfrage wird über die LF-Innenraum-Antennen ausgesendet. Nach Erhalt eines Abfragesignals sendet ein ID-Geber dann ein Anwesenheits-Antwortsignal im Hochfrequenzbereich (HF) zurück, das von einer im Fahrzeug angeordneten HF-Sende-/Empfangseinheit (nicht dargestellt) empfangen und an das Steuergerät gemeldet wird. Daran schließt sich dann eine HF-Challenge-Response-Kommunikation zwischen dem Steuergerät und dem ID-Geber zu dessen Authentifizierung an. Ein ID-Geber verfügt dementsprechend über eine LF-Empfangseinheit und eine HF-Sende-/Empfangseinheit, wobei insbesondere das Senden der HF-Signale relativ viel Energie verbraucht.

Damit die Aussendung der Anwesenheits-Abfragesignale ereignisgesteuert erfolgen kann, wird in dem Steuergerät erfindungsgemäß vor Aussendung von Anwesenheits-Abfragesignalen die Information mindestens eines Zustandssensors für mindestens eine Öffnung (Fahrzeugtür, Kofferraumklappe, Fenster, Schiebedach oder Verdeck) in der "Außenhaut" des Fahrzeuges ausgewertet. Zusätzlich wird die Aussendung von Anwesenheits-Abfragesignalen darüber hinaus von dem Vorliegen eines Zusatzereignisses, wie der Unterschreitung einer Fahrgeschwindigkeit, abhängig gemacht, so wird von dem Steuergerät auch noch das Signal eines Fahrgeschwindigkeitssensors ausgewertet.

## Patentansprüche

1. Verfahren zur Überprüfung der Anwesenheit eines ID-Gebers im Innenraum eines Kraftfahrzeuges,
- wobei der ID-Geber zur drahtlosen Zugangskontrolle und zur drahtlosen Freischaltung eines Motorstart-Schalters dient,
- wobei im Innenraum des Fahrzeuges mindestens eine Antenne zur Aussendung eines Anwesenheits-Abfragesignals vorhanden ist,
**dadurch gekennzeichnet, daß**
- bei laufendem Motor die Aussendung von Anwesenheits-Abfragesignalen über die mindestens eine Innenraum-Antenne nur nach Auswertung der Information mindestens eines Zustandssensors erfolgt, der den Zustand (Offen/Geschlossen) für eine Fahrzeugtür, eine Kofferraumklappe, ein Fenster, ein Schiebedach oder ein Verdeck ermittelt und zusätzlich
- nur dann die Aussendung von Anwesenheits-Abfragesignalen erfolgt, wenn ein Zusatzereignis, wie die Unter-/Überschreitung einer Fahrgeschwindigkeit, die Betätigung der Feststellbremse, der Kupplung, des Schalthebels oder des Getriebewählschalters erfolgt ist.

2. Verfahren nach Anspruch 1,
**dadurch gekennzeichnet, daß**
bei Nichtanwesenheit eines ID-Gebers im Innenraum des Kraftfahrzeuges ein optisches und/oder akustisches Warnsignal erzeugt wird.

## Claims

1. Method of verifying the presence of an ID transmitter in the passenger compartment of a motor vehicle,
• wherein the ID transmitter is designed for wireless admission control and for wireless activation of a motor starter switch,
• wherein there is at least one aerial in the passenger compartment of the vehicle, designed for emitting a presence query signal,
**characterized in that**,
• if the motor is running, the at least one aerial in the passenger compartment will emit presence query signals only after reading the information provided by at least one state sensor which checks the state (Open/Closed) of a vehicle door, a trunk lid, a window, a sun roof, or a folding top,
• and **in that** presence query signals will be emitted only if an additional event has occurred such as the vehicle traveling faster/slower than at a driving speed, the parking brake being activated, the clutch being engaged, the gearshift lever position being changed, or the transmission selector switch being actuated.

2. Method of claim 1,
**characterized in that**
an optical and/or acoustic alert is generated if there is no ID transmitter in the passenger compartment of the motor vehicle.

## Revendications

1. Procédé de vérification de la présence d'un capteur ID dans l'habitacle d'un véhicule,
le capteur ID servant au contrôle d'accès sans fil et à la connexion sans fil d'un interrupteur de démarrage du moteur,
une antenne d'émission d'un signal d'interrogation de présence étant au moins disponible dans l'habitacle du véhicule,
**caractérisé en ce que**
alors que le moteur tourne, l'émission de signaux d'interrogation de présence par au moins une antenne de l'habitacle se fait uniquement après évaluation de l'information d'au moins un capteur d'état qui détermine l'état (ouvert/fermé) d'une porte du véhicule, d'un clapet de coffre, d'une vitre, d'un toit coulissant ou d'une capote et, en plus, **en ce que**
l'émission de signaux d'interrogation de présence se fait uniquement lorsqu'un événement supplémentaire comme le dépassement en hausse/en baisse d'une vitesse de déplacement, l'actionnement du frein de stationnement, de l'embrayage, du levier de vitesse ou du sélecteur de vitesse a eu lieu.

2. Procédé selon la revendication 1,
**caractérisé en ce que**
en cas d'absence d'un capteur ID dans l'habitacle du véhicule, un signal d'avertissement optique et/ou acoustique est généré.
